# EUROPÄISCHE PATENTSCHRIFT

(11) **EP 1 234 129 B1**
(45) Veröffentlichungstag und Bekanntmachung des Hinweises auf die Patenterteilung: **12.10.2005**
(21) Anmeldenummer: 01974122.2
(22) Anmeldetag: 07.08.2001
(51) Int. Cl.: F16H 61/64

(54) **VERFAHREN ZUR DREHZAHLREGELUNG EINER ANTRIEBSMASCHINE**
METHOD FOR REGULATING THE SPEED OF A DRIVE MOTOR
PROCEDE DE REGULATION DU REGIME D'UN MOTEUR D'ENTRAINEMENT

(30) Priorität: 30.08.2000 DE 10042865; 20.09.2000 DE 10046834
(43) Veröffentlichungstag der Anmeldung: 28.08.2002
(73) Patentinhaber: Voith Turbo GmbH & Co. KG, 89522 Heidenheim (DE)
(72) Erfinder: Klement, Werner, 89520 Heidenheim (DE); Vogelsang, Klaus, 74564 Crailsheim (DE); Edelmann, Peter, 89518 Heidenheim (DE); Höller, Heinz, 74564 Crailsheim (DE); Friedrich, Jürgen, 74564 Crailsheim (DE); Kernchen, Reinhard, 74589 Satteldorf (DE)
(74) Vertreter: Dr. Weitzel & Partner
(86) Internationale Anmeldenummer: PCT/EP2001/009088
(87) Internationale Veröffentlichungsnummer: WO 2002/018821

(56) Entgegenhaltungen:
- US-A- 3 055 169
- US-A- 5 426 939
- PATENT ABSTRACTS OF JAPAN vol. 016, no. 016 (M-1200), 16. Januar 1992 (1992-01-16) & JP 03 234969 A (NISSAN MOTOR CO LTD), 18. Oktober 1991 (1991-10-18)

## Beschreibung

Die Erfindung betrifft ein Verfahren zur Drehzahlregelung einer Antriebsmaschine, im einzelnen mit den Merkmalen aus dem Oberbegriff des Anspruches 1; ferner eine Verwendung des Verfahrens.

Verfahren zur Drehzahlregelung einer Antriebsmaschine, insbesondere während des Anfahrvorganges, in einem Antriebsstrang, insbesondere für den Einsatz in Fahrzeugen, umfassend mindestens eine Antriebsmaschine und ein mit dieser wenigstens mittelbar koppelbares Anfahrelement, sind in einer Vielzahl unterschiedlichster Ausführungen hinsichtlich der den Regelvorgang auslösenden Größen, d.h. der Eingangsgrößen der Regeleinrichtung, der Abhängigkeit der Regelgrößen von anderen Größen und der Stellgrößen bekannt. Es ist allgemein bekannt, daß in Antriebssträngen von Fahrzeugen, umfassend eine Verbrennungskraftmaschine, insbesondere Otto- oder Dieselmotor, und ein mit dieser koppelbares mechanisches oder hydrodynamisches Anfahrelement, zur Drehzahlregelung der Antriebsmaschine als Stellgröße eine, die Verstellung des Leistungsstellgliedes der Antriebsmaschine - Drosselkappe oder Einspritzdüse - wenigstens mittelbar charakterisierende Größe gebildet wird und damit die Stelleinrichtung - Drosselklappe oder Einspritzdüse - angesteuert wird. Stellvertretend wird dazu auf "Dieseleinspritztechnik" von Bosch, VDI-Verlag 1993, S. 162 ff. verwiesen. Unter Anfahrvorgang wird dabei die Zeitspanne der Betriebsdauer des Antriebsstranges verstanden, welche durch ein Hochlaufen der Anfahreinheit vom Start, d.h. der Inbetriebnahme der Antriebsmaschine bis zum Wechsel in eine höhere Gangstufe unter Überbrückung des hydrodynamischen Anfahrelementes charakterisiert ist.

Beim Einsatz hydrodynamischer Kupplungen als Anfahrelement in Fahrzeugen sind diese derart gestaltet, daß eine Befüllung während des Anfahrvorganges automatisch, beispielsweise in Abhängigkeit der Drehzahl der Antriebsmaschine oder mit Verzögerung zu dieser erfolgen kann. Es hat sich jedoch gezeigt, daß das sich dadurch einstellende Übertragungsverhalten, charakterisiert durch die Kupplungskennlinie, dadurch geprägt ist, daß hohe Momente nur bei hohen Drehzahlen der Antriebsmaschine übertragbar sind. Dies bedeutet jedoch bei Ausführung der Antriebsmaschine als Verbrennungskraftmaschine, daß der verbrauchsoptimierte Bereich im Motorkennfeld und damit eine schadstoffarme Betriebsweise nicht erreicht wird und desweiteren zur Übertragung hoher Momente immer die Bereitstellung einer entsprechend hohen Leistung durch die Antriebsmaschine erforderlich ist.

Ein Verfahren zur Drehzahlregelung mit den Merkmalen des Oberbegriffs des Anspruchs 1 und eine Vorrichtung mit den Merkmalen des Anspruchs 16 ist bekannt aus US-A-5 426 939.

Der Erfindung liegt daher die Aufgabe zugrunde, ein Verfahren zur Drehzahlregelung einer Antriebsmaschine derart zu entwickeln, daß die genannten Nachteile vermieden werden und bei Bedarf die von Seiten des Energiehaushaltes optimalen, insbesondere beim Einsatz von Antriebsmaschinen in Form von Verbrennungskraftmaschinen verbrauchsoptimierten Bereiche im Kennfeld der Antriebsmaschine während des Anfahrvorganges erreicht werden können. Die erfindungsgemäße Lösung soll sich dabei durch einen geringen steuer- und regelungstechnischen sowie konstruktiven Aufwand auszeichnen.

Die erfindungsgemäße Lösung ist durch die Merkmale des Anspruchs 1 charakterisiert. Vorteilhafte Ausgestaltungen sind in den Unteransprüchen wiedergegeben. Vorteilhafte Einsatzmöglichkeiten sind in den Ansprüchen 12 bis 15 beschrieben. Die Steuer- und/oder Regelvorrichtung ist in Anspruch 16 beschrieben.

Ein Verfahren zur Drehzahlregelung einer Antriebsmaschine in einem Antriebsstrang, umfassend mindestens ein, mit der Antriebsmaschine drehfest verbindbares Anfahrelement in Form einer hydrodynamischen Kupplung ist erfindungsgemäß dadurch gekennzeichnet, daß die Drehzahl der Antriebsmaschine in Abhängigkeit der von der hydrodynamischen Kupplung aufnehmbaren Leistung als Funktion aus Drehzahl und Drehmoment eingestellt wird. Dies bedeutet, daß bei Auftreten einer Regelabweichung zwischen einer, die Drehzahl der Antriebsmaschine wenigstens mittelbar charakterisierenden Größe und einem Istwert der die Drehzahl der Antriebsmaschine wenigstens mittelbar charakterisierenden Größe eine Änderung der Drehzahl der Antriebsmaschine durch
a) Steuerung und/oder
b) Regelung der Leistungsaufnahme, insbesondere der Momentenaufnahme bei einer bestimmten Drehzahl der hydrodynamischen Kupplung
erzielt wird.
Unter "die Drehzahl der Antriebsmaschine wenigstens mittelbar charatkterisierenden Größe" wird dabei entweder eine Größe verstanden, in einem Proportionalitätsverhältnis zur Drehzahl der Antriebsmaschine steht, so daß an dieser die Drehzahl der Antriebsmaschine ermittelt, insbesondere berechnet oder abgeleitet werden kann, oder die Drehzahl der Antriebsmaschine wird direkt ermittelt.

Die erfindungsgemäße Lösung bietet den Vorteil, daß neben einer freien Ansteuerbarkeit energieoptimaler, bei Ausführung der Antriebsmaschine als Verbrennungskraftmaschine verbrauchsoptimierter Betriebspunkte im Kennfeld der Antriebsmaschine eine Übertragung hoher Momente bereits bei niedrigeren Drehzahlen möglich ist und die dazu erforderliche bereitzustellende abgebbare Leistung der Antriebsmaschine gering gehalten werden kann.

Unter einem weiteren Aspekt der Erfindung erfolgt die Steuerung- und/oder Regelung der Leistungsaufnahme der hydrodynamischen Kupplung über die Steuerung- und/oder Regelung des Füllungsgrades der hydrodynamischen Kupplung. Dabei wird im einfachsten Fall eine Steuerung angestrebt. Die Füllungsgradsteuerung erfolgt dabei vorzugsweise durch das Aufbringen eines Beeinflussungsdruckes auf ein ruhendes Medium, insbesondere den im Rahmen einer Betriebsmittelversorgungseinrichtung in einer Betriebsmittelspeichereinrichtung sich einstellenden Betriebsmittelspiegel. Dabei wird ein Teil des im Arbeitsraum befindlichen Betriebsmittels während des Betriebes der hydrodynamischen Kupplung in einem geschlossenen Kreislauf zwischen wenigstens einem Austritt aus dem torusförmigen Arbeitsraum zwischen Pumpenrad und Turbinenrad und wenigstens einem Eintritt in den torusförmigen Arbeitraum geführt, wobei der Eintritt mit einer gegenüber der Umgebung druckdicht geschlossenen Betriebsmittelspeichereinheit gekoppelt ist. Bei Auftreten einer Regelabweichung wird dann eine Stellgröße zur Erzeugung eines Beeinflussungsdruckes auf das in der Betriebsmittelspeichereinheit ruhende Medium erzeugt und die Stelleinrichtung angesteuert. Die Befüllung oder Entleerung erfolgt dann bis zur Einstellung einer Druckwaage zwischen dem Betriebsmittelspiegel in der Betriebsmittelspeichereinrichtung und dem rotierenden geschlossenen Kreislauf.

Unter einem weiteren Aspekt der Erfindung können mit der freien Ansteuerbarkeit einzelner Punkte im Kennfeld der Antriebsmaschine durch die Steuerung des Füllungsgrades gegebenenfalls auch unter Berücksichtigung zusätzlicher Parameter zusätzliche Funktionen realisiert werden. Dazu gehören:
a) die Realisierung einer vollständigen Trennung zwischen Motor und Arbeitsmaschine;
b) die Realisierung einer starren Verbindung zwischen Motor und Arbeitsmaschine;
c) die Funktion der Schwingungsdämpfung über die Einstellung des Schlupfes.

Vorzugsweise wird die Option der Drehzahlregelung während des gesamten Anfahrvorganges in einem Antriebsstrang, d. h. der Zeitdauer des Betriebes der hydrodynamischen Kupplung vorgesehen.

In einer Weiterentwicklung ist das erfindungsgemäße Verfahren Bestandteil der Regelstrecke einer Regelung zur Leistungsabgabe der Antriebsmaschine. Dies bietet den Vorteil der einfachen Realisierung einer äußeren Regelung der Leistungsabgabe der Antriebsmaschine ohne direkte Beeinflussung der Antriebsmaschine, insbeondere ohne erforderliche Ansteuerung des Leistungsstellgliedes, was zu einer Verringerung des steuer- und regelungstechnischen Aufwandes führt.

In einer auf dieser Weiterentwicklung basierenden vorteilhaften Ausführung bildet dieses Verfahren einen Teil der Steuerstrecke zur Einstellung eines konstanten und zeitlich unabhängigen Haltemomentes für die Haltefunktion einer Arbeitsmaschine. Durch diese spezielle Steuerungsaufgabe können die konventionellen Bremseinrichtungen, beispielsweise während des Haltens eines Fahrzeuges an einer Steigung entlastet werden.

Eine andere Möglichkeit besteht darin, die Drehzahlregelung der Antriebsmaschine in einer Regelung zur Einstellung einer konstanten, weder zeit- noch motordrehzahlabhängigen Abtriebsdrehzahl, d. h. Drehzahl an, Abrieb, beispielsweise einer Arbeitsmaschine zu integrieren.

Ein wesentlicher Vorteil dieses Verfahrens besteht des weiteren darin, daß zur Realisisierung der einzelnen Steuer- und Regelaufgaben lediglich mindestens die nachfolgend genannten Größen für den Regelvorgang berücksichtigt werden müssen:
- die aktuelle Ist-Drehzahl der Antriebsmaschine;
- die aktuelle Ist-Drehzahl am Abtrieb der Turbokupplung
- die Drehrichtung des Abtriebes;
- eine, eine gewünschte einzustellende Drehzahl der Antriebsmaschine wenigstens mittelbar charakterisierende Größe und
- optional interne Zustandsgrößen zur Beschreibung der Funktionsweise einzelner Komponenten des Antriebsstranges.

Der Aufwand für die Bereitstellung entsprechender Erfassungseinrichtungen kann damit ebenfalls gering gehalten werden bzw. beschränkt sich auf die ohnehin im Antriebsstrang vorhandenen Erfassungseinrichtungen.

Die erfindungsgemäße Lösung der Drehzahlregelung, insbesondere der Einstellung der Drehzahl der Antriebsmaschine in Abhängigkeit des Füllungsgrades ist nicht auf eine konkrete Ausgestaltung des Antriebsstranges mit hydrodynamischer Kupplung als Anfahrelement beschränkt. Dabei können die Antriebsmaschinen beispielsweise in Form von Verbrennungskraftmaschinen oder Elektromotoren ausgeführt sein. Die Anwendung kann in stationären Anlagen oder mobilen Einrichtungen, vorzugsweise im Fahrzeug erfolgen.

Die erfindungsgemäße Lösung ist nachfolgend anhand von Figuren erläutert. Darin ist im einzelnen folgendes dargestellt:
- Figuren 1a und 1b: verdeutlichen in schematisch vereinfachter Darstellung anhand von Blockschalt- und Signalflußbildern das Grundprinzip eines erfindungsgemäßen Verfahrens zur Drehzahlregelung und des Aufbaus der Regelvorrichtung;
- Figur 1c: verdeutlicht anhand eines, Signalflußbildes ein erfindungsgemäßes Verfahren zur Drehzahlregelung der Antreibsmaschine mit integrieter Regelung der aufnehmbaren Leistung durch die hydrodynamische Kupplung;
- Figur 2: verdeutlicht anhand einer schematisierten Darstellung einer hydrodynamischen Kupplung und des dieser zugeordneten Betriebsmittelversorgungssystems das Grundprinzip der Füllungsgradsteuerung;
- Figur 3: zeigt anhand des Drehzahl-/Drehmomenten-Kennfeldes einer Antriebsmaschine einen Vergleich der Kennlinie der hydrodynamischen Kupplung mit konventionell betriebenen Anfahrelementen;

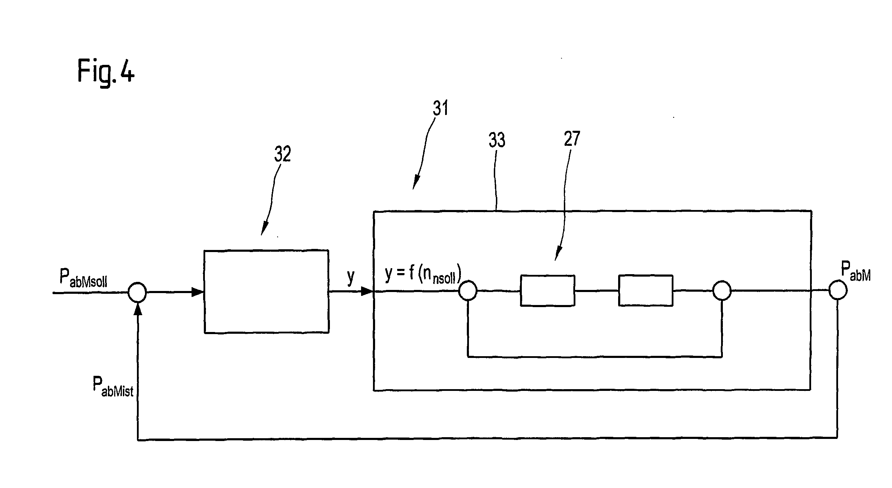

- Figur 4: verdeutlicht anhand eines Signalflußbildes die Möglichkeit der Regelung der Leistungsabgabe der Antriebsmaschine.

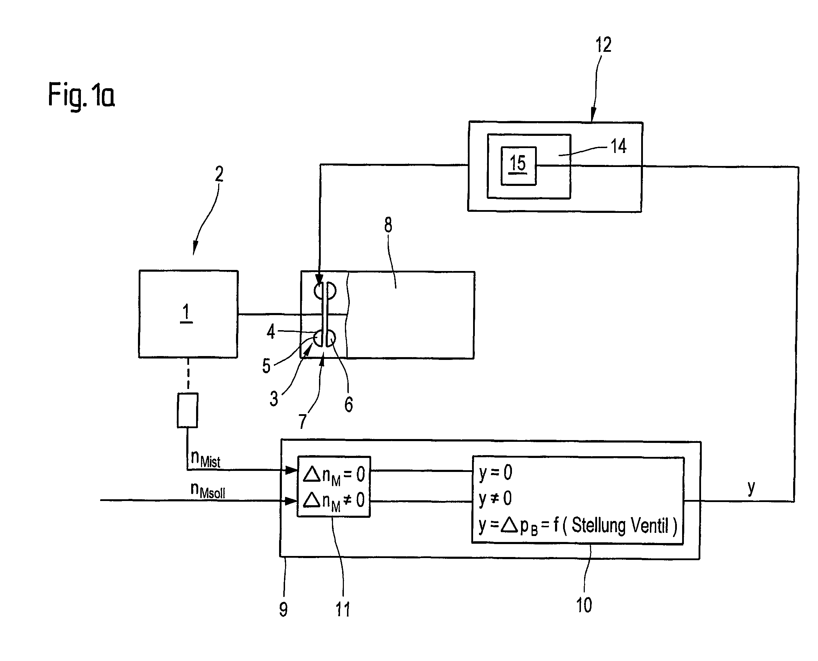

Die Figur 1a verdeutlicht in schematisch vereinfachter Darstellung anhand eines Blockschaltbildes das Grundprinzip eines erfindungsgemäßen Verfahrens zur Regelung der Drehzahl einer Antriebsmaschine 1 in einem Antriebsstrang 2 während des Anfahrvorganges. Der Antriebsstrang 2 umfaßt dabei mindestens ein, mit der Antriebsmaschine 1 wenigstens mittelbar koppelbares Anfahrelement 3, welches als hydrodynamische Kupplung 4, umfassend wenigstens ein als Pumpenrad fungierendes Primärschaufelrad 5 und ein als Turbinenrad fungierendes Sekundärschaufelrad 6, welche miteinander wenigstens einen torusförmigen Arbeitsraum 7 bilden, ausgeführt ist. Die Antriebsmaschine 1 ist beim bevorzugten Einsatz des erfindungsgemäßen Verfahrens in Fahrzeugen vorzugsweise als Verbrennungskraftmaschine ausgeführt. Denkbar sind jedoch auch Ausführungen als Elektromotor. Das Anfahrelement ist vorzugsweise in einer Getriebebaueinheit 8 integriert.

Erfindungsgemäß erfolgt die Drehzahlregelung der Antriebsmaschine 1 als Funktion des Motordrehmomentes M in Abhängigkeit vom möglichen aufnehmbaren Moment M_{auf} durch die hydrodynamische Kupplung 4. D. h. die Höhe der von der hydrodynamischen Kupplung 4 aufnehmbaren Leistung P_{auf}, insbesondere des aufnehmbaren Momentes, welche im wesentlichen der von der Antriebsmaschine 1 abgebbaren Leistung P_{abM} bzw. dieser, vermindert um die erforderliche Leistung für den Antrieb von Zusatz- oder Nebenaggregaten entspricht, bestimmt damit aufgrund der einem bestimmten Füllungsgrad FG der Kupplung zugeordneten charakteristischen Beziehung zwischen dem sich einstellenden Drehzahlverhältnis n_{T}/n_{P} der einzelnen Schaufelräder der hydrodynamischen Kupplung und der Leistungszahl' das übertragbare Moment M. Über die aufnehmbare Leistung ergibt sich dann die Drehzahl des Pumpenrades n_{P} und somit die dieser entsprechende oder zumindest dazu proportionale Drehzahl n_{M} der Antriebsmaschine 1.

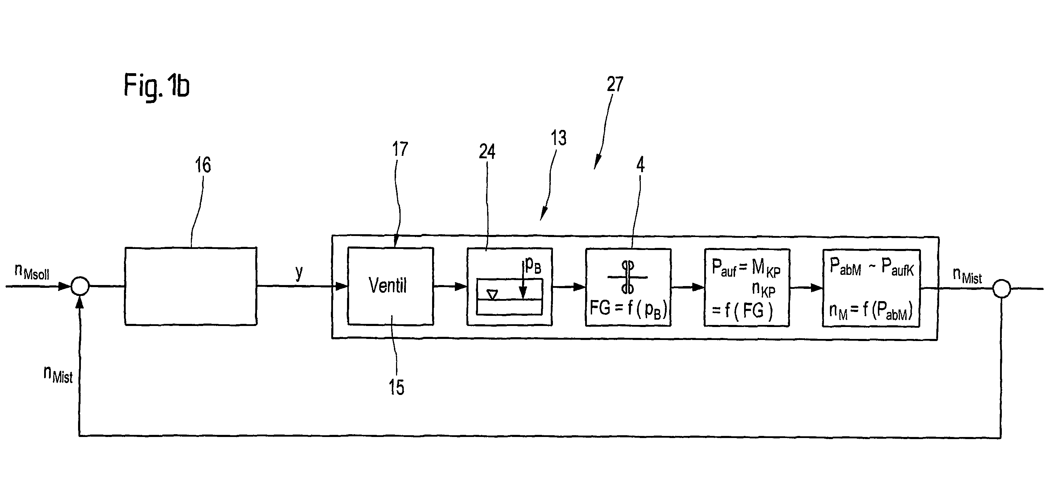

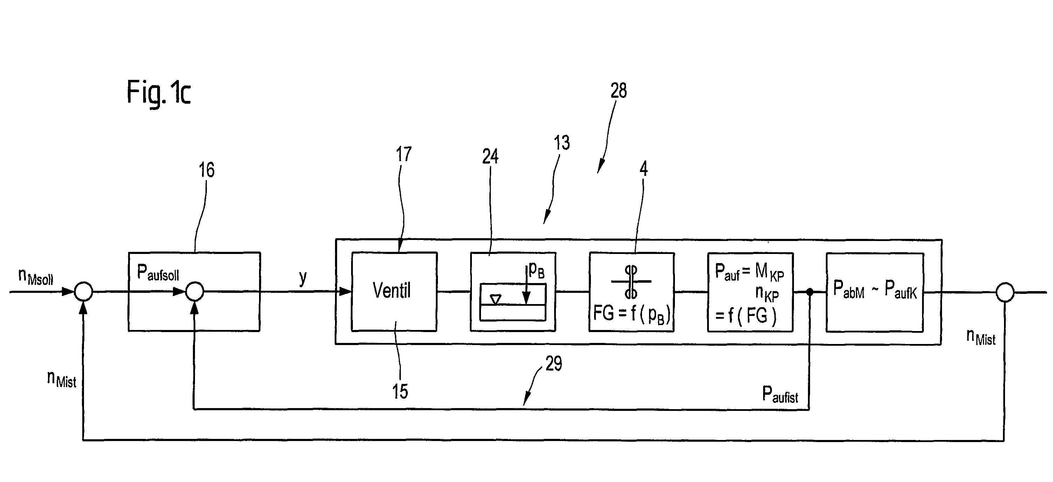

Zur Einregelung einer bestimmten Drehzahl n_{Msoll} der Antriebsmaschine 1 in Abhängigkeit der von der hydrodynamischen Kupplung 4 aufnehmbaren Leistung P_{auf} erfolgt dabei gemäß Figur 1a und dem Signalflußbild entsprechend Figur 1b durch Steuerung oder vorzugsweise Regelung der Leistungsaufnahme der hydrodynamischen Kupplung 4, d.h. Regelung der aufnehmbaren Leistung P_{auf}, wie anhand eines Signalflußbildes in Figur 1c dargestellt.

Die Größe der aufnehmbaren Leistung P_{auf} ist eine Funktion des Füllungsgrades FG der hydrodynamischen Kupplung 4. Der Füllungsgrad FG wird dabei gesteuert.

Vorrichtungsmäßig ist der Antriebsmaschine 1 zu diesem Zweck eine Steuer- und/oder Regelvorrichtung 9, umfassend wenigstens eine Steuer- und/oder Regeleinrichtung 10 zugeordnet, welche wenigstens eine Vergleichseinrichtung 11 aufweist, in der wenigstens ein Sollwert für eine, die Drehzahl n_{M} der Antriebsmaschine wenigstens mittelbar beschreibende Größe, vorzugsweise die Drehzahl n_{Msoll}, mit einem Ist-Wert einer, die Drehzahl der Antriebsmaschine wenigstens mittelbar charakterisierenden Größe, vorzugsweise der Ist-Drehzahl n_{Mist}, verglichen wird. Aus der Regelabweichung Δn_{M} zwischen der Soll-Drehzahl n_{Msoll} und der Ist-Drehzahl n_{Mist} der Antriebsmaschine 1 wird eine Stellgröße für die Steuerung der von der hydrodynamischen Kupplung 4, insbesondere dem Primärschaufelrad 5, aufnehmbaren Leistung P_{auf} gebildet. Bei gewünschter, in Figur 1c dargestellter Regelung der aufnehmbaren Leistung P_{auf} wird aus der Stellgröße die Sollgröße P_{aufsoll} gebildet und mit der aktuellen Istgröße P_{aufist} fortlaufend verglichen. Die Erfassung des Istwertes der aufnehmbaren Leistung P_{aufist} erfolgt dabei im einfachsten Fall durch Erfassung der die Leistung wenigstens mittelbar beschreibenden Größen Moment mist und Drehzahl mist, wozu entsprechende Erfassungseinrichtungen vorzusehen wären. Die Regelabweichung ΔP_{auf} führt dann zu einer entsprechenden Änderung der Stellgröße y. Zum Wirksamwerden der Stellgröße y ist der hydrodynamischen Kupplung 4 eine Einrichtung zur Änderung bzw. Beeinflussung der Leistungsaufnahme 12 zugeordnet. Diese ist hinsichtlich des Wirkungsweges in der Regelstrecke 13 der Drehzahlregelung integriert. Die Einrichtung zur Änderung und/oder Beeinflussung 12 der Leistungsaufnahme umfaßt dabei Mittel 14 zur Füllungsgradänderung während des Anfahrvorganges. Dabei erfolgt die Füllungsgradänderung vorzugsweise durch Füllungssteuerung durch Aufbringen eines äußeren Druckes auf ein ruhendes Medium zur Erzeugung einer Druckwaage zwischen einem geschlossenen rotierenden Kreislauf und dem ruhenden Medium. Der geschlossene rotierende Kreislauf ist druckdicht, d. h. die Zuström- und Abströmräume aus dem Arbeitsraum der hydrodynamischen Kupplung und die Leitungsverbindung zwischen diesen sind druckmitteldicht ausgeführt. Dieser Druck, welcher auch als Beeinflussungsdruck p_{B} bezeichnet wird, wird beispielsweise mittels eines Druckregelventiles 15, welches Bestandteil der Mittel 14 zur Füllungsgradänderung ist, erzeugt.

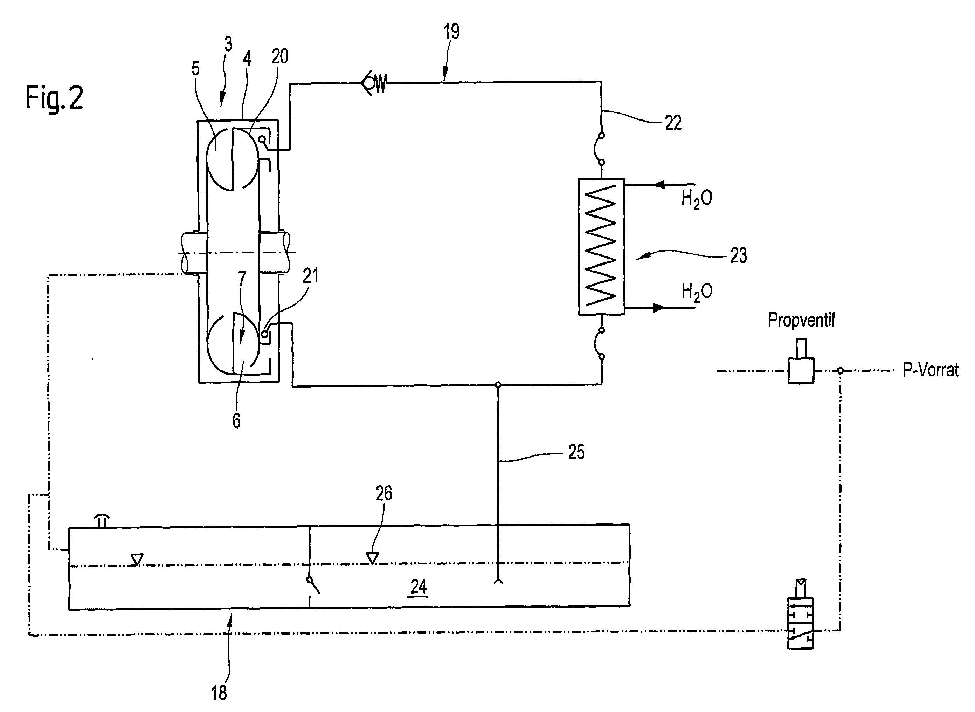

Das Prinzip der Aufbringung eines äußeren Druckes auf ein ruhendes Medium ist im einzelnen in Figur 2 anhand einer schematischen Darstellung einer hydrodynamischen Kupplung 4 und des diesem zugeordneten Betriebsmittelversorgungssystems 18 wiedergegeben. Dabei läuft ein Teil des im torusförmigen Arbeitsraum 5 in der hydrodynamischen Kupplung vorhandene Betriebsmittel in einem geschlossenen Kreislauf 19 um. Der geschlossene Kreislauf 19 ist dabei als Kühlmittelkreislauf ausgeführt, das heißt es wird während des Betriebes der hydrodynamischen Kupplung 4 Betriebsmittel in bestimmten Mengen aus dem Arbeitsraum 7 heraus, insbesondere vom Austritt 20 aus dem Arbeitsraum 7, und über wenigstens einen Eintritt 21 in den Arbeitsraum 7 geführt. Dazu ist ein Leitungssystem 22 vorgesehen. In diesem sind Mittel 23 zur Abfuhr von Wärme angeordnet, beispielsweise in Form eines Wärmetauschers. Die Führung des Betriebsmittels aus dem Arbeitsraum 7 in den Arbeitsraum 7 im geschlossenen Kreislauf 19 dient dabei hauptsächlich der Kühlung des Betriebsmittels, insbesondere der Erzeugung eines kontinuierlichen Kühlbetriebsmittelstromes. Das Betriebsmittelversorgungssystem 18 umfaßt eine druckdicht ausgeführte Betriebsmittelspeichereinrichtung 24, beispielsweise in Form eines Betriebsmittelsumpfes in einem Behälter oder Tank, welche über wenigstens einen Verbindungkanal 25 mit dem geschlossenen Kreislauf 19 im Bereich des Eintrittes 21 koppelbar ist. Die Betriebsmittelspeichereinrichtung 24 ist dabei derart angeordnet, daß der sich einstellende Betriebsmittelspiegel 26, vorzugsweise unterhalb des torusförmigen Arbeitsraumes 7 angeordnet ist. Auf den Betriebsmittelspiegel 25 wird zur Änderung des Füllungsgrades FG ein Beeinflussungsdruck p_{B} aufgebracht, wobei dieser bei Einwirkung auf den geschlossenen Sumpf so lange Betriebsmittel in den Arbeitskreislauf im torusförmigen Arbeitsraum über Verbindungskanal 25 einläßt, bis der Druck im Bereich des Eintrittes 21 nach dem Wärmetauscher ein Druckgleichgewicht herstellt.

Die Figur 1 b verdeutlicht anhand eines Signalflußbildes das Zusammenwirken der einzelnen Elemente im Gesamtwirkungsweg 27 der Drehzahlregelung bei Steuerung der aufnehmbaren Leistung P_{auf}. Die Regeleinrichtung 16 entspricht funktionsgemäß der Steuer- und /Regeleinrichtung 10. Die Regelstrecke 13 bildet dabei denjenigen Teil des Wirkunsweges, welcher den zu beeinflussenden Bereich des Antriebsstranges 2 darstellt. Über die Regeleinrichtung 16 wird dabei die Beeinflussung der Regelstrecke 13 über ein Stellglied 17, welches vom Druckregelventil 15 gebildet wird, bewirkt. Als weitere Übertragungsglieder fungieren die druckdicht ausgeführte Betriebsmittelspeichereinrichtung 24 und die hydrodynamische Kupplung 4. Die von dieser aufnehmbare Leistung P_{auf} als Funktion des Füllungsgrades FG entspricht dabei einem bestimmten Moment M_{KP} und einer bestimmten Drehzahl n_{KP}, woraus sich die von der Antriebsmaschine 1 abgebbare Leistung P_{abM} bestimmen läßt und damit, in Abhängigkeit des dem Füllungsgrad FG zugeordneten Momentes die Drehzahl n_{M} der Antriebsmaschine 1.

Die Figur 1 c verdeutlicht anhand eines Signalflußbildes das Zusammenwirken der einzelnen Elemente im Gesamtwirkungsweg der Drehzahlregelung 28 bei Regelung der aufnehmbaren Leistung P_{auf}. Der Wirkungsweg für die Regelung der aufnehmbaren Leistung P_{auf} ist dabei mit 29 bezeichnet. Im übrigen entspricht die Regelstrecke 13 der in Figur 1b beschriebenen, weshalb für gleiche Elemente die gleichen Bezugsziffern verwendet werden.

Die erfindungsgemäße Lösung ermöglicht es, die Drehzahl n_{M} einer Antriebsmaschine 1 derart einzustellen, daß ein hinsichtlich des Anfahrvorganges optimales Verhalten der Antriebsmaschine erzielbar ist. Dabei kann jeder einzelne Betriebspunkt im Kennfeld der Antriebsmaschine 1 separat bzw. stationär angefahren, das heißt eingestellt werden. Dies erfolgt in Abhängigkeit der Steuerung oder Regelung der von der hydrodynamischen Kupplung aufnehmbaren Leistung.

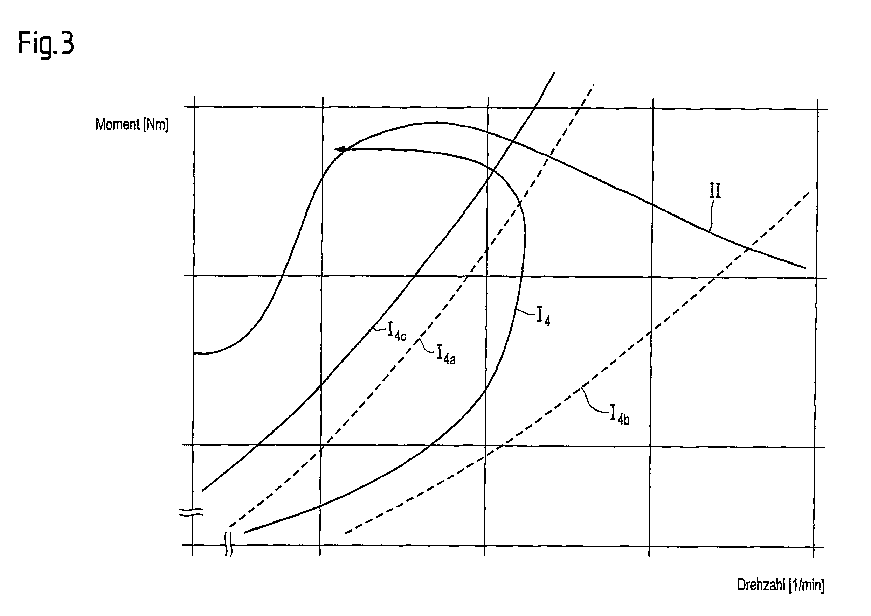

Ein wesentliches Kriterium für die Drehzahlregelung bildet dabei der lastfreie Hochlauf einer Antriebsmaschine 1, insbesondere bei Ausführungen für den Einsatz in Fahrzeugen bei Ausbildung dieser in Form einer Verbrennungskraftmaschine der emissionsoptimierte Betrieb. Da die Leistungsaufnahme des Anfahrelementes, insbesondere der hydrodynamischen Kupplung von dieser selbst und nicht von einer, an diese wenigstens mittelbar auf der Abtriebsseite angeschlossene Arbeitsmaschine abhängig ist, ist beim Einbau eines derartigen Elementes zwischen der Antriebsmaschine 1 und dem Abtrieb zu berücksichtigen, daß für jeden Belastungszustand zwischen der Antriebsmaschine 1 und der hydrodynamischen Kupplung auch ein Gleichgewichtszustand hinsichtlich des Drehmomentes und der Drehzahl gegeben sein muß. Dabei steht die von der Antriebsmaschine abgebbaren Leistung im seltensten Fall vollständig der dem Anfahrelement nachgeordneten Getriebebaueinheit, und damit dem hydrodynamischen Bauelement während des Anfahrvorganges zur Verfügung. Die Leistungen für Hilfsmaschinen, wie beispielsweise Lüfter, Lichtmaschinen, Pumpen usw., die vor dem Anfahrelement angeordnet sind, müssen dabei von der zur Verfügung stehenden Antriebsleistung abgezogen werden. Während des Anfahrvorganges bei niedrigen Drehzahlen ist es dabei erforderlich, um die Antriebsmaschine möglichst im verbrauchsoptimierten Bereich zu betreiben, bereits bei sehr geringen Drehzahlen ein möglichst großes Moment zu übertragen. Ein derartiges Verhalten kann durch die gezielte Füllungsgradänderung erzielt werden. Die über die hydrodynamische Kupplung aufnehmbare Leistung bewirkt dabei eine Änderung der Drehzahl der Antriebsmaschine 1. Figur 3 verdeutlicht dabei einander gegenübergestellt die möglichen Anfahrkennlinien verschiedener Anfahrelemente 4a-4c und einer erfindungsgemäß während des Anfahrvorganges hinsichtlich der möglichen Leistungsaufnahme gesteuerten oder geregelten Turbokupplung 4 im Drehzahl-/Drehmoment-Kennfeld der Antriebsmaschine 1. Die Momentenlinie der Antriebsmaschine ist mit II bezeichnet. Den einzelnen Anfahrkennlinien sind nachfolgend genannte Indizierungen zugeordnet:
1. Trilok-Wandler - 1₄ₐ
2. Trilok-Wandler mit Überbrückung - I_{4b}
3. hydrodynamische Kupplung mit Überbrückung - I_{4c}
4. erfindungsgemäß gesteuerte hydrodynamische Kupplung - I₄

Aus den Kennlinien wird ersichtlich, daß mit der erfindungsgemäßen Lösung ein gesteuerter und lastfreier Hochlauf der Antriebsmaschine 1 und ein Betrieb im emissionsoptimierten Bereich der Antriebsmaschine, insbesondere der Verbrennungskraftmaschine möglich ist. Des weiteren wird die Übertragbarkeit hoher Momente zunehmend zu geringeren Drehzahlen der Antriebsmaschine hin verschoben.

Unter einem weiteren Aspekt der Erfindung ist die Drehzahlregelung der Antriebsmaschine in einer Regelung 31 der Leistungsabgabe der Antriebsmaschine 1 ohne direkte Beeinflussung des Abtriebes integriert. Diese verdeutlicht eine Regeleinrichtung 32 zum Vergleich eines Sollwertes für die abgebbare Leistung P_{abMsoll} mit einem Ist-Wert P_{abMist}. Die abgebbare Leistung P_{abM} bestimmt sich dabei u.a. durch die Drehzahl n_{M}. Die Regelung der Drehzahl erfolgt dabei hinsichtlich der Betrachtungsweise bezüglich der Wirkung im Rahmen der Regelstrecke 33 der Regelung 31.

Die freie Steuerbarkeit des Füllungsgrades der hydrodynamischen Kupplung ermöglicht des weiteren bei entsprechender Steuervorgabe die Einstellung eines konstanten, zeitlich unabhängigen, lastabhängigen Haltemomentes für Haltefunktionen, zum Beispiel beim Einsetzen in Fahrzeugen, das Halten eines Kraftfahrzeuges in einer Steigung.

### Bezugszeichenliste:

- 1: Antriebsmaschine
- 2: Antriebsstrang
- 3: Anfahreinheit
- 4: hydrodynamische Kupplung
- 5: Primärschaufelrad
- 6: Sekundärschaufelrad
- 7: torusförmiger Arbeitsraum
- 8: Getriebebaueinheit
- 9: Steuer- und Regelvorrichtung
- 10: Steuer- und Regeleinrichtung
- 11: Vergleichseinrichtung
- 12: Einrichtung zur Änderung und Beeinflussung der aufnehmbaren Leistung
- 13: Regelstrecke
- 14: Mittel zur Füllungsgradänderung
- 15: Druckregelventil
- 16: Regeleinrichtung
- 17: Stellglied
- 18: Betriebsmittelversorgungssystem
- 19: geschlossener Kreislauf
- 20: Austritt
- 21: Eintritt
- 22: Leitungssystem
- 23: Mittel zur Abfuhr von Wärme
- 24: Betriebsmittelspeicher
- 25: Verbindungskanal
- 26: Betriebsmittelspiegel
- 27: Gesamtwirkungsweg
- 28: Gesamtwirkungsweg
- 29: Wirkungsweg
- 30: Regelung
- 31: Regelung der von der Antriebsmaschine abgebbaren Leistung
- 32: Regeleinrichtung
- 33: Regelstrecke
- n_{Msoll}: Soll-Drehzahl
- n_{Mist}: Ist-Drehzahl
- P_{auf}: aufnehmbare Leistung
- P_{aufist}: Istwert der aufnehmbaren Leistung
- P_{aufsoll}: Sollwert der aufnehmbare Leistung
- ΔP_{auf}: Leistungsabweichung
- P_{abist}: Istwert der abgebbaren Leistung der Antriebsmaschine
- P_{absoll}: Sollwert der abgebbaren Leistung der Antriebsmaschine
- p_{B}: Beeinflussungsdruck
- γ: Stellgröße

## Patentansprüche

1. Verfahren zur Drehzahlregelung einer Antriebsmaschine (1) während eines Anfahrvorganges in einem Antriebsstrang (2), umfassend mindestens ein mit der Antriebsmaschine (1) drehfest verbindbares Anfahrelement (3) in Form einer hydrodynamischen Kupplung (4), umfassend ein Primärschaufelrad (5) und ein Sekundärschaufelrad (6), welche miteinander wenigstens einen torusförmigen Arbeitsraum (7) bilden, **dadurch gekennzeichnet, daß** die Drehzahl der Antriebsmaschine (1) in Abhängigkeit der von der hydrodynamischen Kupplung (4) aufnehmbaren Leistung, insbesondere des aufnehmbaren Momentes bei einer bestimmten Drehzahl eingestellt wird.

2. Verfahren nach Anspruch 1, **dadurch gekennzeichnet, daß** bei Auftreten einer Regelabweichung zwischen einer, die Drehzahl der Antriebsmaschine wenigtens mittelbar charakterisierenden Größe und einem Istwert der die Drehzahl der Antriebsmaschine wenigstens mittelbar charakterisierenden Größe eine Änderung der Drehzahl der Antriebsmaschine (1) durch die Steuerung und/oder Regelung der Leistungsaufnahme der hydrodynamischen Kupplung (4) erfolgt.

3. Verfahren nach Anspruch 2, **dadurch gekennzeichnet, daß** die Steuerung- und/oder Regelung der Leistungsaufnahme der hydrodynamischen Kupplung (4) mittels einer Steuerung- und/oder Regelung des Füllungsgrades der hydrodynamischen Kupplung (4) erzielt wird.

4. Verfahren nach Anspruch 3, **gekennzeichnet durch** die folgenden Merkmale:
4.1 ein Teil des Betriebsmittels wird während des Betriebes der hydrodynamischen Kupplung (4) in einem geschlossenen Kreislauf zwischen einem Austritt aus dem torusförmigen Arbeitsraum (7) zwischen Pumpenrad (5) und Turbinenrad (6) und einem Eintritt in den torusförmigen Arbeitraum (7) geführt;
4.2 der Eintritt ist mit einer gegenüber der Umgebung druckdicht geschlossenen Betriebsmittelspeichereinheit gekoppelt;
4.3 daß bei Auftreten einer Regelabweichung eine Stellgröße zur Erzeugung eines Beeinflussungdruckes auf das in der Betriebsmittelspeichereinheit ruhende Medium erzeugt wird und die Stelleinrichtung angesteuert wird.

5. Verfahren nach Anspruch 4, **dadurch gekennzeichnet, daß** der Beeinflussungsdruck über eine von einer Antriebsmaschine (1) angetriebene Zahnradpumpe erfolgt.

6. Verfahren nach Anspruch 1 bis 5, **dadurch gekennzeichnet, daß** die Drehzahlregelung mindestens während des gesamten Anfahrvorganges in einem Antriebsstrang durchgeführt wird.

7. Verfahren nach einem der Ansprüche 1 bis 6, **dadurch gekennzeichnet, daß** dieses Teil der Regelstrecke einer Regelung zur Leistungsabgabe der Antriebsmaschine (1) ist.

8. Verfahren nach einem der Ansprüche 1 bis 6, **dadurch gekennzeichnet, daß** dieses Teil der Steuerstrecke zur Einstellung eines konstanten und zeitlich unabhängigen Haltemomentes für die Haltefunktion einer Arbeitsmaschine ist.

9. Verfahren nach einem der Ansprüche 1 bis 6, **dadurch gekennzeichnet, daß** dieses Teil der Regelstrecke einer Regelung zur Einstellung einer konstanten, weder zeit- noch motordrehzahlabhängigen Abtriebsdrehzahl verwendet wird.

10. Verfahren nach einem der Ansprüche 1 bis 9, **dadurch gekennzeichnet, daß** mindestens die nachfolgend genannten Größen für den Regelvorgang berücksichtigt werden:
- die aktuelle Ist-Drehzahl der Antriebsmaschine;
- die aktuelle Ist-Drehzahl am Abtrieb der Turbokupplung
- die Drehrichtung des Abtriebes;
- ein, eine gewünschte einzustellende Drehzahl der Antriebsmaschine wenigstens mittelbar charakterisierende Größe und
- optional interne Zustandsgrößen zur Beschreibung der Funktionsweise einzelner Komponenten des Antriebsstranges.

11. Verfahren gemäß einem der Ansprüche 4 bis 10, **dadurch gekennzeichnet, daß** die Stellgröße parameterabhängig ist.

12. Verwendung eines Verfahrens gemäß einem der Ansprüche 1 bis 11 in einem Antriebstrang (2) mit einer Antriebsmaschine (1) in Form einer Verbrennungskraftmaschine.

13. Verwendung eines Verfahrens gemäß einem der Ansprüche 1 bis 11 in einem Antriebstrang (2) mit einer Antriebsmaschine (1) in Form eines Elektromotors.

14. Verwendung eines Verfahrens gemäß Anspruch 12 oder 13 in einem Fahrzeug.

15. Verwendung eines Verfahrens gemäß Anspruch 12 oder 13 in einer stationären Anlage.

16. Steuer- und/oder Regelvorrichtung (9) zur Durchführung des Verfahrens gemäß einem der Ansprüche 1 bis 11,
16.1 mit einer Steuer- und/oder Regeleinrichtung (10)
16.2 die mit einer Einrichtung zur Erfassung des Istwertes einer die Drehzahl der Antriebsmaschine wenigstens mittelbar beschreibenden Größe verbunden ist, **gekennzeichnet durch** die folgenden Merkmale: die Steuer- und/oder Regeleinrichtung (10) ist mit einer Einrichtung zur Vorgabe eines Sollwertes für die Drehzahl der Antriebsmaschine verbunden;
16.3 die Steuer- und/oder Regeleinrichtung (10) umfaßt mindestens eine Vergleichseinrichtung (11) zum Vergleich eines Sollwertes einer die Drehzahl der Antriebsmaschine wenigstens mittelbar beschreibenden Größe mit einem Istwert; und eine Einrichtung zum Bilden eines Sollwertes für den Füllungsgrad der hydrodynamischen Kupplung;
16.4 die Steuer- und/oder Regeleinrichtung (10) umfaßt mindestens einen Ausgang, welcher mit einen Stellglied zur Beeinflußung des Füllungsgrades der hydrodynamischen Kupplung gekoppelt ist.

## Claims

1. A method for the speed control of an engine (1)during a starting process in a drive train (2), comprising at least one starting element (3) in the form of a hydrodynamic coupling (4) which can be connected in a torsionally rigid manner with the engine (1) and comprises a primary blade wheel (5) and a secondary blade wheel (6) which jointly form at least one toroidal working chamber (7), **characterized in that** the speed of the engine (1) is set depending on the power that can be absorbed by the hydrodynamic coupling (4), especially the absorbable moment at a certain speed.

2. A method according to claim 1, **characterized in that** when there is a deviation from a rule between a variable characterizing at least indirectly the speed of the engine and an actual value of a variable characterizing at least indirectly the speed of the engine there will be a change in the speed of the engine (1) by open-loop and/or closed-loop control of the power intake of the hydrodynamic coupling (4).

3. A method according to claim 2, **characterized in that** the open-loop and/or closed-loop control of the power intake of the hydrodynamic coupling (4) is achieved by means of open-loop and/or closed-loop control of the degree of filling of the hydrodynamic coupling (4).

4. A method according to claim 3, **characterized by** the following features:
4.1 a part of the operating material is guided during the operation of the hydrodynamic coupling (4) in a closed circulation between on outlet from the toroidal working chamber (7) between pump wheel (5) and turbine wheel (6) and an inlet into the toroidal working chamber (7);
4.2 the inlet is coupled with a storage unit for the operating material which is sealed off in a pressure-tight manner to the environment;
4.3 upon occurrence of a deviation of the rule, a correcting variable for generating an influencing pressure on the medium resting in the storage unit for the operating medium is generated and the actuating device is triggered.

5. A method according to claim 4, **characterized in that** the influencing pressure is carried out by a gearwheel pump driven by an engine (1).

6. A method according to claim 1 to 5, **characterized in that** the speed control is carried out during the entire starting process in a drive train.

7. A method according to one of the claims 1 to 6, **characterized in that** it is a part of the controlled system of a closed-loop control for power output of the engine (1).

8. A method according to one of the claims 1 to 6, **characterized in that** it is a part of the controlled system for setting a constant and time-independent holding moment for the holding function of an engine.

9. A method according to one of the claims 1 to 6, **characterized in that** it is part of the controlled system of a closed-loop control for setting a constant output speed which is neither time-dependent nor engine-speed-dependent.

10. A method according to one of the claims 1 to 9, **characterized in that** at least the following variables are considered for the closed-loop control process:
- the current actual speed of the engine;
- the current actual speed on the power take-off of the hydraulic coupling;
- the rotating direction of the power take-off;
- a variable characterizing at least indirectly a desired speed of the engine to be set, and
- optional internal state variables for describing the mode of function of individual components of the drive train.

11. A method according to one of the claims 4 to 10, **characterized in that** the actuating variable is parameter-dependent.

12. The use of a method according to one of the claims 1 to 11 in a drive train (2) with an engine (1) in the form of an internal combustion engine.

13. The use of a method according to one of the claims 1 to 11 in a drive train (2) with an engine (1) in the form of an electromotor.

14. The use of a method according to claim 12 or 13 in a vehicle.

15. The use of a method according to claim 12 or 13 in a stationary installation.

16. An open-loop and/or closed-loop control apparatus (9) for performing the method according to one of the claims 1 to 11,
16.1 with an open-loop and/or closed-loop control device (10);
16.2 which is connected with a device for detecting the actual value of a variable describing at least indirectly the speed of the engine, **characterized by** the following features:
the open-loop and/or closed-loop control device (10) is connected to a device for predetermining a setpoint value for the speed of the engine;
16.3 the open-loop and/or closed-loop control device (10) comprises at least one comparison device (11) for comparing with an actual value the setpoint value of a variable describing at least indirectly the speed of the engine; and a device for forming a setpoint value for the degree of filling of the hydrodynamic coupling;
16.4 the open-loop and/or closed-loop control device (10) comprises at least one output which is coupled with an actuator for influencing the degree of filling of the hydrodynamic coupling.

## Revendications

1. Procédé pour la régulation de la vitesse de rotation d'une machine d'entraînement (1) pendant un processus de démarrage dans une chaîne de transmission (2), comprenant au moins un élément démarreur (3) pouvant être relié de manière solidaire en rotation avec la machine d'entraînement (1) et prenant la forme d'un embrayage hydrodynamique (4), comprenant une roue à aubes primaire (5) et une roue à aubes secondaire (6), qui forment ensemble au moins un espace de travail toroïdal (7), **caractérisé en ce que** la vitesse de rotation de la machine d'entraînement (1) est ajustée en fonction de la puissance pouvant être absorbée par l'embrayage hydrodynamique (4), en particulier du couple pouvant être absorbé à une vitesse de rotation donnée.

2. Procédé selon la revendication 1, **caractérisé en ce qu'**en cas d'écart de régulation entre une grandeur caractérisant au moins indirectement la vitesse de rotation de la machine d'entraînement et une valeur réelle de la grandeur caractérisant au moins indirectement la vitesse de rotation de la machine d'entraînement, la vitesse de rotation de la machine d'entraînement (1) est modifiée par commande et/ou régulation de la puissance absorbée par l'embrayage hydrodynamique (4).

3. Procédé selon la revendication 2, **caractérisé en ce que** la commande et/ou la régulation de la puissance absorbée par l'embrayage hydrodynamique (4) sont obtenues au moyen d'une commande et/ou d'une régulation du niveau de remplissage de l'embrayage hydrodynamique (4).

4. Procédé selon la revendication 3, **caractérisé par** les éléments suivants :
4.1. une partie du fluide de fonctionnement est guidée en circuit fermé pendant le fonctionnement de l'embrayage hydrodynamique (4) entre une sortie de
4.2. l'espace de travail toroïdal (7) située entre la roue de pompe (5) et la roue de turbine (6) et une entrée dans l'espace de travail toroïdal (7) ;
4.2. l'entrée est couplée avec une unité d'accumulation du fluide de fonctionnement fermée de manière étanche à la pression par rapport à l'environnement ;
4.3 en cas d'écart de régulation, une grandeur de réglage est générée pour produire une pression d'action sur le fluide au repos dans l'unité d'accumulation du fluide de fonctionnement, et le dispositif de réglage est activé.

5. Procédé selon la revendication 4, **caractérisé en ce que** la pression d'action est produite par une pompe à engrenage entraînée par une machine d'entraînement (1).

6. Procédé selon les revendications 1 à 5, **caractérisé en ce que** la régulation de la vitesse de rotation est exécutée au moins pendant tout le processus de démarrage dans une chaîne de transmission.

7. Procédé selon l'une quelconque des revendications 1 à 6, **caractérisé en ce qu'**il fait partie de la ligne de régulation d'une régulation de la délivrance délivrée par la machine d'entraînement (1).

8. Procédé selon l'une quelconque des revendications 1 à 6, **caractérisé en ce qu'**il fait partie de la ligne de régulation servant au réglage d'un couple de retenue constant et indépendant dans le temps pour la fonction de retenue d'une machine de travail.

9. Procédé selon l'une quelconque des revendications 1 à 6, **caractérisé en ce qu'**il fait partie de la ligne de régulation d'une régulation pour le réglage d'une vitesse de rotation de sortie constante et indépendante du temps et de la vitesse de rotation du moteur.

10. Procédé selon l'une quelconque des revendications 1 à 9, **caractérisé en ce que** les grandeurs suivantes au moins sont prises en compte pour l'opération de régulation :
- vitesse de rotation réelle actuelle de la machine d'entraînement ;
- vitesse de rotation réelle actuelle à la sortie de l'embrayage hydrodynamique ;
- sens de rotation de la sortie ;
- une grandeur caractérisant au moins indirectement une vitesse de rotation souhaitée à régler de la machine d'entraînement ; et
- facultativement, des grandeurs d'état internes décrivant le mode de fonctionnement de différents composants de la chaîne de transmission.

11. Procédé selon l'une quelconque des revendications 4 à 10, **caractérisé en ce que** la grandeur de réglage dépend des paramètres.

12. Utilisation d'un procédé selon l'une quelconque des revendications 1 à 11 dans une chaîne de transmission (2) avec une machine d'entraînement (1) prenant la forme d'un moteur à combustion interne.

13. Utilisation d'un procédé selon l'une quelconque des revendications 1 à 11 dans une chaîne de transmission (2) avec une machine d'entraînement (1) prenant la forme d'un moteur électrique.

14. Utilisation d'un procédé selon la revendication 12 ou 13 dans un véhicule.

15. Utilisation d'un procédé selon la revendication 12 ou 13 dans une installation stationnaire.

16. Dispositif de commande et/ou de régulation (9) pour la mise en oeuvre du procédé selon l'une quelconque des revendications 1 à 11, avec
16.1 un dispositif de commande et/ou de régulation (10),
16.2 qui est relié à un dispositif pour la détection de la valeur réelle d'une grandeur décrivant au moins indirectement la vitesse de rotation de la machine d'entraînement,
**caractérisé par** les éléments suivants :
le dispositif de commande et/ou de régulation (10) est relié à un dispositif destiné à définir une valeur de consigne pour la vitesse de rotation de la machine d'entraînement,
16.3 le dispositif de commande et/ou de régulation (10) comprend au moins un dispositif comparateur (11) destiné à comparer une valeur de consigne et une valeur réelle d'une grandeur décrivant au moins indirectement la vitesse de rotation de la machine d'entraînement, et un dispositif destiné à former une valeur de consigne pour le niveau de remplissage de l'embrayage hydrodynamique,
16.4 le dispositif de commande et/ou de régulation (10) comprend au moins une sortie qui est couplée à un organe de réglage destiné à influencer le niveau de remplissage de l'embrayage hydrodynamique.
